# EUROPEAN PATENT APPLICATION

(11) **EP 1 926 103 A2**
(43) Date of publication of application: **28.05.2008**
(21) Application number: 07120048.9
(22) Date of filing: 06.11.2007
(51) Int. Cl.: G11B 27/10, H04N 9/804

(54) **System, method and medium playing moving images**

(30) Priority: 27.11.2006 KR 20060117802
(71) Applicant: Samsung Electronics Co., Ltd., Suwon-si, Gyeonggi-Do (KR)
(72) Inventor: Chung, Ji-hye c/o Samsung Advanced Institute of Technology,, 446-712 Gyeonggi-do (KR); Lee, Hye-jeong c/o Samsung Advanced Institute of Technology,, 446-712 Gyeonggi-do (KR); Park, Min-kyu c/o Samsung Advanced Institute of Technology,, 446-712 Gyeonggi-do (KR); Lee, Yong-beom c/o Samsung Advanced Institute of Technology,, 446-712 Gyeonggi-do (KR)
(74) Representative: D'Halleweyn, Nele Veerle Trees Gertrudis

(57) **Abstract**

A system, method and a medium playing moving images including various content objects is described. The system includes a generating unit (110) generating a script (30) and an execution module (40), the script (30) defining a structure of the moving image including at least one content object, and the execution module (40) defining a dynamic effect of the content object, a frame management unit (150) analyzing the script and the execution module and generating frame meta-information based on a predetermined frame rate, and a playing unit (120) applying the content object to the frame meta-information and constructing frame images.

## Description

### CROSS-REFERENCE TO RELATED APPLICATIONS

This application claims priority from Korean Patent Application No. 10-2006-0117802 filed on November 27, 2006 in the Korean Intellectual Property Office, the disclosure of which is incorporated herein by reference in its entirety.

### BACKGROUND

### 1. Field

One or more embodiments of the present invention relate generally to playback of moving images. More particularly, one or more embodiments of the present invention relate to a system, method and a medium playing moving images including various content objects.

### 2. Description of the Related Art

As generally known in the art, many users view a quantity of individual contents, e.g., photographs, in a slide show mode, which displays a quantity of contents at a predetermined time interval. Particularly, in the slide show mode an individual content is displayed and, after a predetermined period of time, another content is displayed. As such, the slide show simply displays contents in a static manner, and cannot satisfy the desire of a user to compose contents according to their own preferences or memories and express the contents dynamically.

In addition, the fact that only one content is displayed at a time in a static manner makes it difficult to intuitively associate the currently displayed content with the previous or next content, even when the contents are related (e.g. when they are photographs taken at the same place).

In an attempt to avoid monotony associated with the slide show mode, various additional effects (e.g. stickers, captions) or dynamic effects (e.g. zooming, panning, tilting) are added to contents. However, this approach still provides contents in the same manner, and fails to meet all of the user's needs.

Recently, moving images are frequently authored using personal contents. However, conventional tools are difficult to use without professional knowledge and, when a user wants to use a format suitable for specific devices, to which authored contents are to be transmitted or shared, greater effort must be made on the part of the user. In order to alleviate such problems, conventional technologies have been proposed to enable users to author moving images from contents with greater convenience. Particularly, these technologies enable users to gather a number of contents and generate a single moving image from them. Furthermore, the moving image can be applied to a home server, for example, by transmitting and sharing it. In this regard, the moving image is generated from personal photographs, digital images, and music sources based on an execution module. A typical example of the moving image is an SWF (Shock Wave Flash) file authored by "FLASH" software available from Adobe Inc. (Macromedia).

In order to author a moving image, it is necessary to structure contents into a moving image and add enough effects to satisfy the user, even if not obvious to the user.

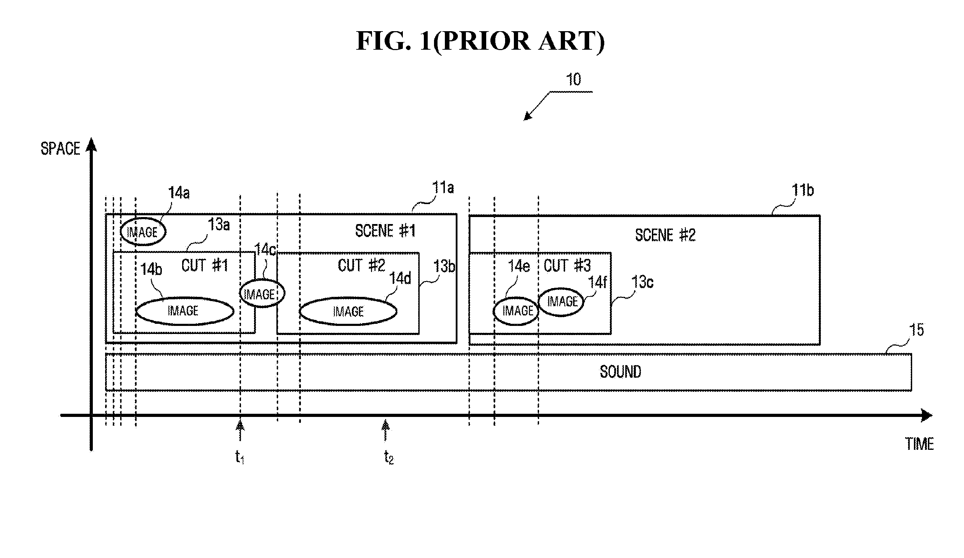

FIG. 1 shows the operation of an apparatus 10 for playing moving images according to the conventional art. The apparatus 10 combines various contents, including scenes 11 a and 11 b, cuts 13a, 13b, and 13c, images 14a to 14f, and sound 15, and displays or outputs them. The scenes 11a and 11 b are determined based on a single background screen, and may include other contents therein. The cuts 13a, 13b, and 13c act as units of movement and modification, and may include other contents therein. For example, when a cut rotates, contents included therein rotate together.

The apparatus 10 plays a moving image with reference to playback start portions (marked with dotted lines) of respective contents. Particularly, the contents are displayed for a predetermined duration from corresponding playback start portions. Dynamic effects may be added to the contents. Although the moving image can be accessed with reference to the playback start portions, it is not possible to access the moving image with reference to an arbitrary point of time. For example, the user can access arbitrarily at location t₁, but cannot do so at location t₂.

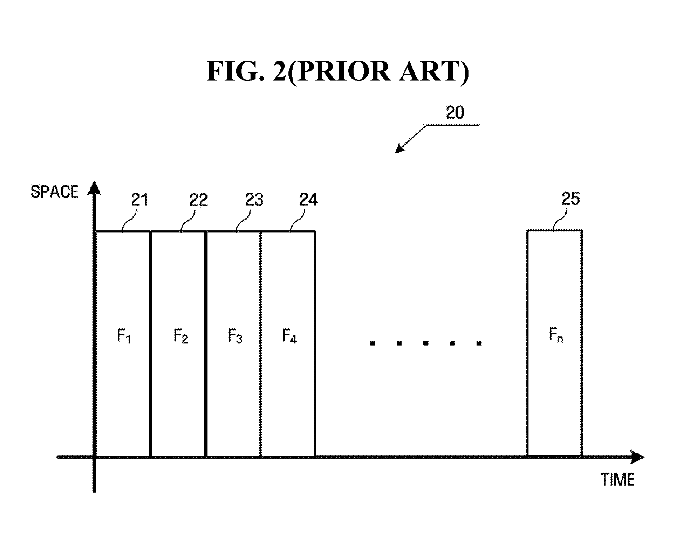

FIG. 2 shows a video frame playback process of a conventional video playback apparatus 20. As used herein, the terms "video" and "video sequence" are distinguished from a moving image and include a plurality of video frames 21 to 25. More particularly, a moving image includes a plurality of contents, each of which can be controlled independently, but a video contains various images, each of which simply consists of pixel information and cannot be controlled independently. In other words, video belongs to a category of contents which the moving image may include, in addition to those already described such as photographs, scenes, images and sounds.

Referring to FIG. 2, video frames 21 to 25 are successively displayed at a time interval based on a frame rate (frame display count per hour). For example, if the frame rate is 30, each video frame is successively displayed for 1/30 second. Therefore, the user can access any of the entire video frames. Depending on the video coding mode, the frames may be divided into those which can be accessed arbitrarily (frame I, MPEG) and those which cannot be (frames P and B, MPEG). However, this may not be a serious problem when searching for a desired scene.

Therefore, the present inventors have determined it desirable to develop technology for efficiently generating moving images and playing or controlling the generated moving images according to user demands.

### SUMMARY

Accordingly, one or more embodiments of the present invention has been made to address at least the above-mentioned problems. Aspects of embodiments of the present invention provide a system, method and medium for easily generating, playing, and controlling a moving image that includes various independent contents, according to user demands.

Aspects of the present invention further provide a method for easily coding the played moving image into a video.

Additional aspects and/or advantages will be set forth in part in the description which follows and, in part, will be apparent from the description, or may be learned by practice of the invention.

To achieve at least the above and/or other aspects and advantages, embodiments of the present invention include a moving image playing system, including, a generating unit generating a script and an execution module, the script defining a structure of the moving image including at least one content object and the execution module defining a dynamic effect of the content object, a frame management unit analyzing the script and the execution module and generating frame meta-information based on a predetermined frame rate, and a playing unit applying the content object to the frame meta-information and constructing frame images.

To achieve at least the above and/or other aspects and advantages, embodiments of the present invention include a moving image playing method, including, generating a script and an execution module, the script defining a structure of the moving image including at least one content object and the execution module defining a dynamic effect of the content object, analyzing the script and the execution module and generating frame meta-information based on a predetermined frame rate, and applying the content object to the frame meta-information and constructing frame images.

To achieve at least the above and/or other aspects and advantages, embodiments of the present invention include a moving image playing system, including, a user selectable template predefining a structure of at least one user selected content object making up the moving image and predefining a dynamic effect of the content object.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 shows the operation of an apparatus for playing moving images, according to the conventional art;
FIG. 2 shows a conventional video frame playback process;
FIG. 3 illustrates the construction of a system playing moving images, according to an embodiment of the present invention;
FIG. 4 illustrates the folder structure of templates and moving images, according to an embodiment of the present invention;
FIG. 5 conceptually shows the structure of a script, according to an embodiment of the present invention;
FIG. 6 shows an example of a user interface, according to an embodiment of the present invention;

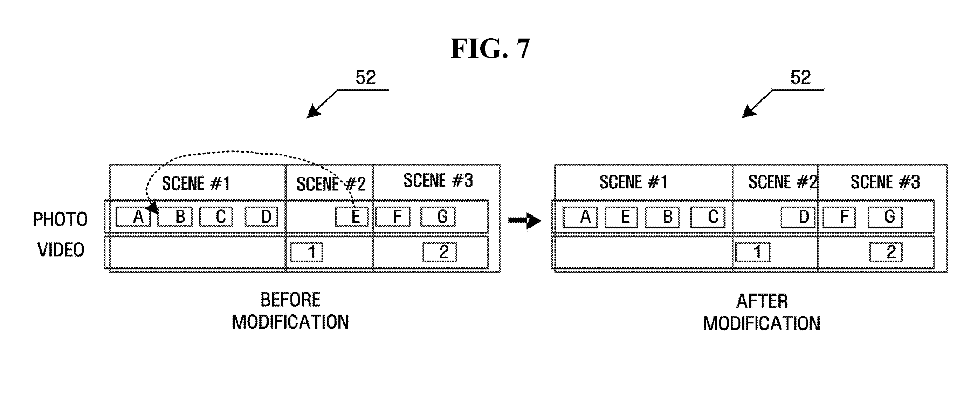

FIG. 7 shows a method for modifying the order of arranging photographs, according to an embodiment of the present invention;
FIGs. 8 and 9 show examples of dynamic effects, according to an embodiment of the present invention;
FIG. 10 shows an example of a user interface for controlling the playback of moving images, according to an embodiment of the present invention;
FIG. 11 illustrates the operation of a frame management unit, according to an embodiment of the present invention;
FIG. 12 conceptually illustrates a process for converting a moving image into frames, according to an embodiment of the present invention;
FIG. 13 shows a method for calculating the attribute of objects for each frame, according to an embodiment of the present invention; and
FIG. 14 shows the structure of frame meta-information, according to an embodiment of the present invention.

### DETAILED DESCRIPTION OF EMBODIMENTS

Reference will now be made in detail to embodiments, examples of which are illustrated in the accompanying drawings, wherein like reference numerals refer to the like elements throughout. Embodiments are described below to explain the present invention by referring to the figures.

According to embodiments of the present invention, in order to author a moving image easily and efficiently, backgrounds, decoration and conversion effects, which constitute an image, may be predefined and provided to a user as templates so that the user may select one of the templates and insert user-selected photographs, images, video sequences and sounds into the moving image. Then, he can watch them in real time. In addition, in order to guarantee that the authored moving image is conveniently shared, embodiments of the present invention support extraction of images based on frames and storage of the images as compressed moving image files.

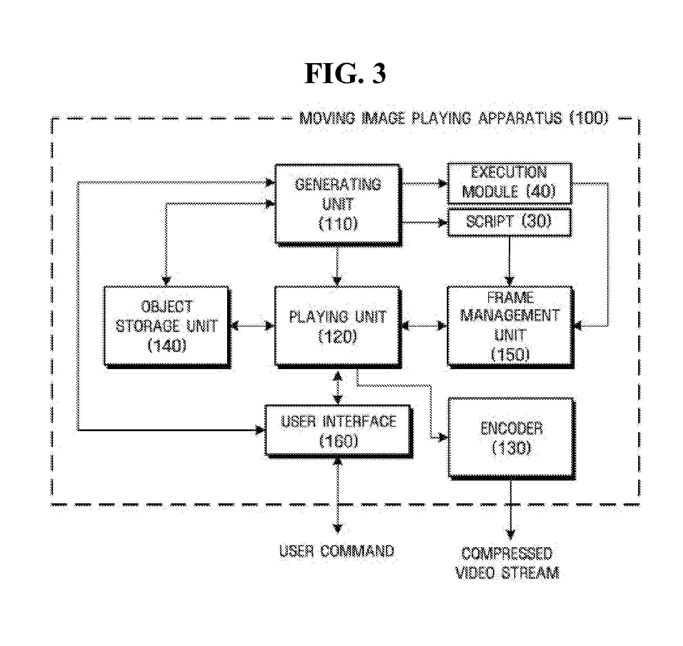

FIG. 3 illustrates a system 100 displaying moving images, according to an embodiment of the present invention. The system 100 may include, for example, a generating unit 110, a playing unit 120, an encoder 130, an object storage unit 140, a frame management unit 150 and a user interface 160.

The generating unit 110 may generate a moving image from various content objects (hereinafter, referred to as objects) and, as its product, generate a script 30 and an execution module 40. As used herein, objects are components of a moving image, and include photographs, sounds, video sequences, backgrounds, stickers, and texts (e.g., titles, descriptions, captions, etc). The objects may be constructed scene by scene so that they are modified for each background screen. The generating unit 110 may easily generate a moving image with a template that predefines a script and an execution module.

The template may be regarded as a tool for arranging a plurality of objects. Particularly, the template may predefine the arrangement of objects and dynamic effects so that the user need only select contents, which are to be used as the objects, and thus more simply generate a moving image.

The dynamic effects may include, for example, transition (objects appear or disappear slowly), animation (the location and size of objects are varied at various rates as time elapses), and camerawork (seems like the camera moves without moving objects).

The template may include a script 30 and an execution module 40, just like a moving image generated according to user preferences. The script 30 may be described in a markup language, such as HTML (Hyper Text Markup Language) or XML (extensible Markup Language), and the execution module 40 may be implemented as a SWF file of Adobe Inc. (Macromedia).

The script 30 defines the structure of a moving image, which includes a plurality of scenes, each of which may include various objects. Following Table 1 gives an example of a script 30 regarding a template and an actually generated moving image.

**Table 1:**

| | Template | Moving image |
|---|---|---|
| Characteristics | Define all possible attributes | Replace with actually used contents |
| Externally shared information | Defined as attributes according to predetermined standards, and opened | |
| Font | Uppermost common font defined Individual fonts can be defined at lower levels | |
| Background sound | Uppermost common background music defined Individual background music and effect sounds can be defined at lower levels | |
| Scene | Intro/ending/story screens differentiated Background images, cuts, stickers, texts (data, titles, descriptions, etc) included | |
| | <scene name="intro/ending" url="./scene/*.swf" mincontent="-1" maxcontent="-1" transin=".swf" > <data><bgimg> <cut> <sticker> <caption> </scene> | |
| Cut | Contents, frames, stickers, texts, etc. included | |
| Contents | Basic images for preview | Contents of actual users |
| | <content url=".jpg" isPortrait="false" title="photo description" dur="0" width="640" height="480" date="yyyy.mm.dd"/>(url = full path) | |

In Table 1, the term "intro" may refer to a partial image giving an overall impression of the moving image before the user's contents appear. Scenes of the moving image defined as its parts having the same background, and the user can watch scenes one by one. The scenes may include, for example, the user's photographs, other decoration elements (stickers, captions, etc.), and dynamic effects. The term "ending" may refer to a partial image concluding the whole story after the moving image, including the user's photographs, is completely presented. The background sound may be applied either to the entire moving image or to each scene. Respective objects may be expressed according to attributes specified by the script, but, if no attributes have been specified, basic attributes may be adopted. For example, the priority may follow the order of generation. Alternatively, if there is dependency among objects, lower objects may inherit the attributes of upper objects.

As such, the script 30 may present every component of the moving image in a markup language type. When the moving image is played, the playing unit 120 may parse the script 30, render the execution module 40 and the objects in real time, and show the objects.

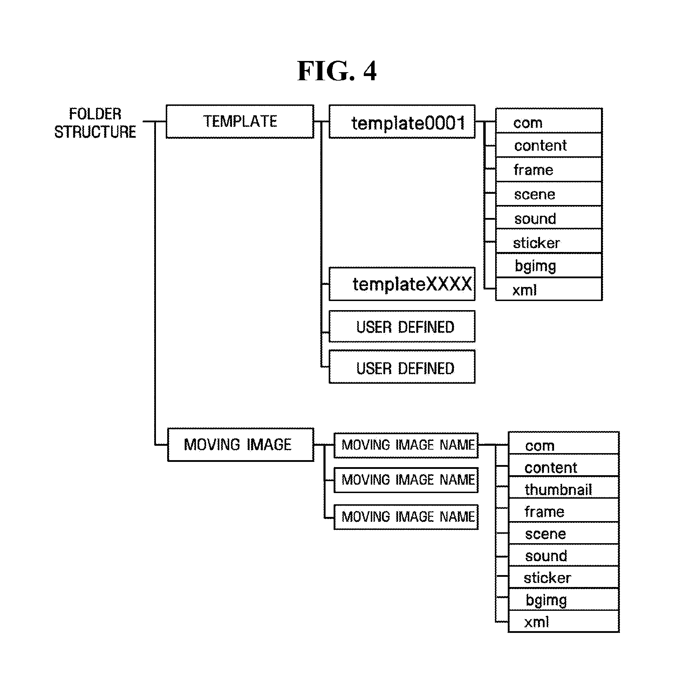

The system 100 for playing moving images may use the same script structure for both the actual moving image and the template so that, when the user inserts user objects for authoring, he can preview their shape. In order to maintain the shape of the image previewed by the user as it is after authoring, the moving image and the template may have the same physical folder structure as shown in FIG. 4, except that the contents of the template included in respective folders may be reconstructed together with user objects.

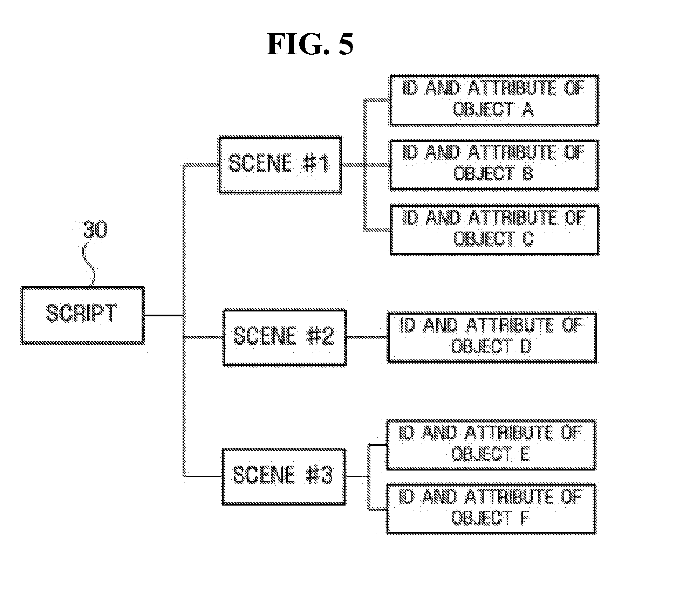

FIG. 5 conceptually shows the structure of a script 30, which includes a plurality of scenes #1, #2, and #3. Each scene may have URLs for identifying a plurality of objects and attributes of the objects recorded therein. The identifier may be used to load a specific object from the object storage unit 140.

As used herein, attributes may refer to quantified values indicating the characters of an object at a particular moment. For example, the attributes may include an object's X coordinate, Y coordinate, depth, rotational angle, width, height, and transparency. The reference point of X and Y coordinates may be positioned on the left upper end of a background, which constitutes a scene. The depth of an object may refer to a value used to display a plurality of objects when they are positioned in overlapping spaces.

In short, the URL of objects and the initial value of their various attributes may be recorded in the script 30, and the varying attributes of the objects are recorded in the execution module 40.

A URL recorded in the script 30 may refer to the URL of an object itself. Furthermore, the URL may include the URL of an execution module (e.g. SWF file) defining the dynamic effect of the object. For example, the URL of a caption in Table 1 is designated as "./caption/*.swf", wherein "*.swf" does not simply refer to the URL of the caption (i.e. object) itself, but the URL of the execution module indicating the dynamic effect of the caption.

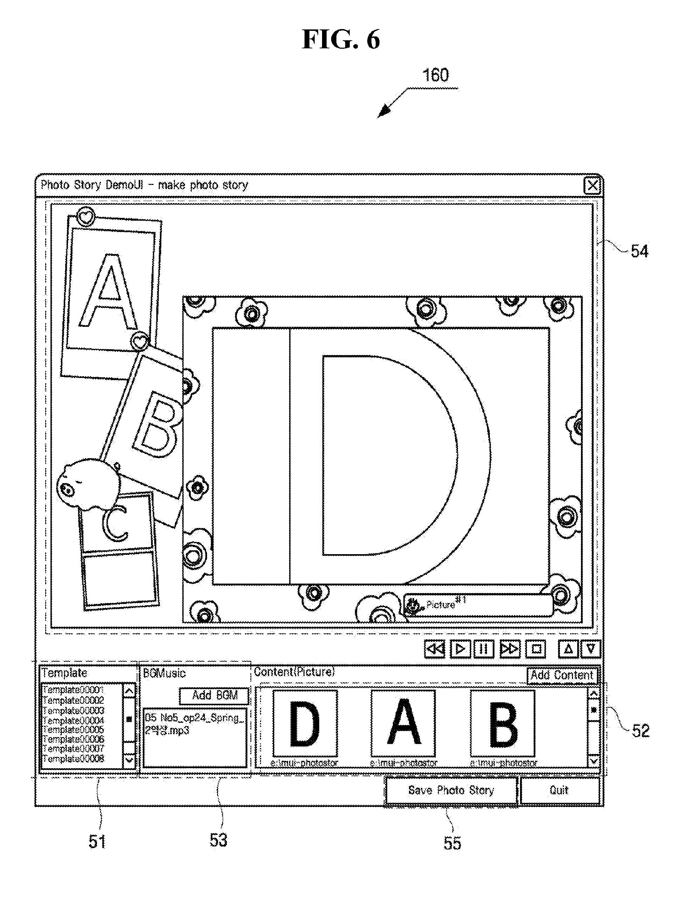

Referring to FIG. 3 again, the user interface 160 receives user commands so as to generate a moving image according to user preferences. FIG. 6 shows an example of the user interface 160. If the user selects one from the list 51 of templates of a moving image, it is played in a preview window 54. If the user selects one of his own photographs, the selected photograph may be reflected in the template, and the result may be played in the preview window 54. The selected photograph may be inserted as a component of one of a plurality of scenes #1, #2, and #3 as shown in FIG. 6. When the user wants to modify the order of the arranged photographs, which have been inserted scene by scene, he may simply drag and drop a photograph between the others. For example, if the user drags and drops photograph E between photographs A and B, then photos following photo E are moved backwards by a column. As such, the user can easily select photographs to be inserted into scenes and conveniently modify their order. In this manner, the user can modify the order and content of objects to be presented, and he can even modify a scene to which a specific object belongs. Let's suppose that four objects A, B, C, and D belong to scene #1, and the next object E belongs to scene #2. If the boundary between scenes #1 and #2 is moved in front of the third object C, the third object C comes to belong to scene #2.

When the user selects one from the list 53 of music (sound objects) as shown in FIG. 6, the selected music is reflected in the template, and the result is played in the preview window 54 as in the case of photographs. If the user wants to save the currently played moving image, he can do so by pressing the Save button 55. What is saved in this case may include the script 30, the execution module 40, and objects constituting the moving image. The saved moving image can be played in an environment selected by the user. In addition, it can be edited, saved as a moving image file, deleted, etc.

Referring to FIG. 3 again, when a moving image is finally constructed via the user interface 160, the generating unit 110 endows the objects, which have been arranged for each scene so as to construct the moving image, with dynamic effects (e.g. transition, animation, and camerawork). The dynamic effects may be predefined by the template or stored as an execution module (e.g. SWF file).

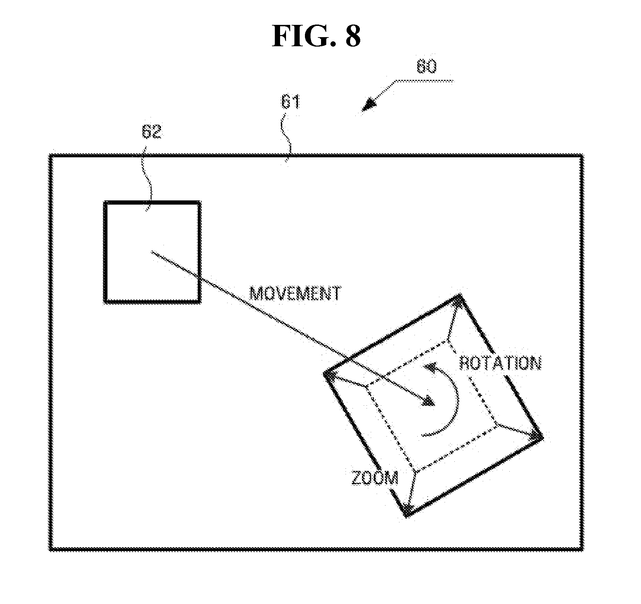

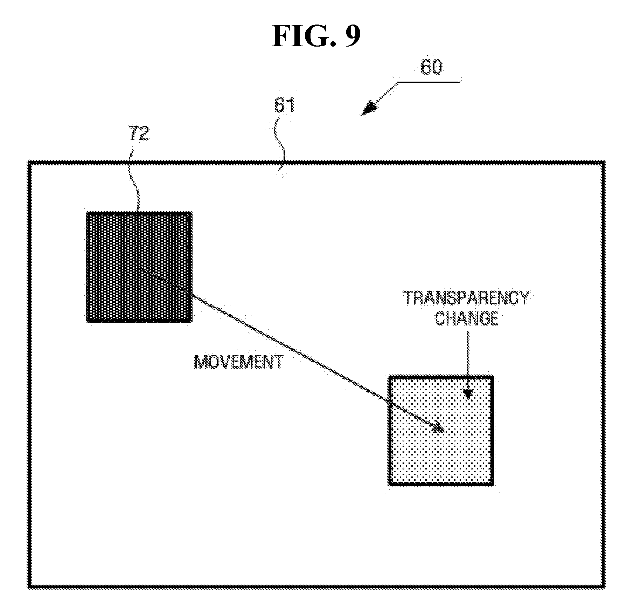

FIGs. 8 and 9 show examples of dynamic effects. Referring to FIG. 8, a scene 60 includes a background 61. An object 62 included in the scene 60 may move away from the initial location, rotate, or enlarge. In addition, the object 62 may move, rotate, and enlarge at the same time. Referring to FIG. 9, an object 72 included in the scene 60 may change its transparency while moving away from the initial location. If the transparency becomes 1 (100%) or if the duration of the object 72 expires, the object 72 is displayed no more. Due to these dynamic effects, the playback of the moving image is perceived by the user in the same manner as the playback of a normal video sequence.

At last, the generating unit 110 generates a script 30 and an execution module 40 as the final product regarding the moving image. Objects necessary to construct the moving image are pre-stored in the object storage unit 140.

Referring to FIG. 3 again, the object storage unit 140 may be a memory or a database for storing various objects used as the components of a moving image. Particularly, the object storage unit 140 is a non-volatile storage medium, such as a hard disk or a flash memory, or another type of storage medium.

The playing unit 120 may parse the script 30 and load objects included therein. The playing unit 120 may apply dynamic effects based on the execution module 40 to the object and plays the moving image. The playing unit 120 may use Shockwave Flash OCX control for the dynamic effects.

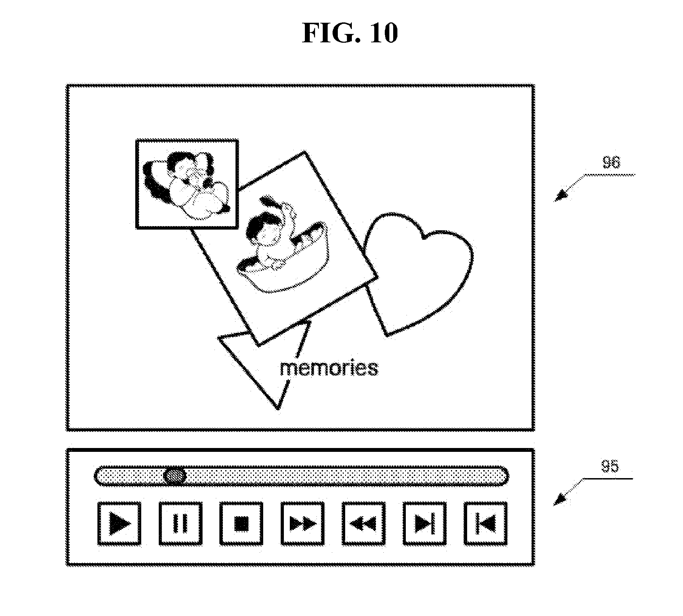

The playing unit 120 may provide the user with convenient functions for watching a template or a moving image, including playing, stopping, pausing, fast-forwarding, fast-rewinding, and accessing locations arbitrarily. FIG. 10 shows an example of a user interface 95 used by the user to input user commands to the playing unit 120 and a screen 96 for playing the moving image. The user can use the interface 95 and command various playback control operations regarding the corresponding moving image.

In order to receive user commands or output the playback condition, the playing unit 120 may provide various API (Application Programming Interface) functions. Table 2 below gives an example of eleven APIs based on a script.

**Table 2:**

| No. | API function | Functionality |
|---|---|---|
| Condition output function | long psGetTotaIFrames() | Returns total frame number of moving image |
| | long psGetCurrentFrame() | Returns current frame number |
| | long psGetState() | Returns current condition of playing unit (0=Busy/ 1=Stopped/ 2=Playing/ 3=Fast Forwarding/ 4=Fast Rewinding) |
| | long psGetVolume() | Returns current music playback volume as a value between 0 and 100 |
| Command input function | void psPlay() | Starts playback from current frame |
| | void psPause() | Stops playback, but does not reset current frame as 1 |
| | void psStop() | Stops playback, and resets current frame as 1 |
| | void psFastForward() | Plays forwards at triple rates |
| | void psFastBackward() | Plays backwards at triple rates |
| | void psGotoNextFrame() | Moves forwards from current frame by one frame and stops playback |
| | void PsSetVolume(int vol) | Sets current music playback volume as input volume value |

In the case of a normal video sequence, its playback control (e.g. fast-forwarding/rewinding or arbitrary access) may be simply implemented by reducing the display time of frames or by skipping the frames. However, unlike the video sequence, a moving image is not a simple collection of pixel information. In contrast, the moving image may maintain information regarding respective objects. Therefore, although there will be little problem when the moving image is simply played, it generally should be converted into frames in order to apply various types of playback control while it is played.

The frame management unit 150 may analyze the script 30 and the execution module 40, calculate the total playback time of the moving image, and apply a predetermined frame rate to the calculation result so as to generate information for each frame. When the playing unit 120 generates various types of playback control, the frame management unit 150 may provide the playing unit 120 with information regarding frames corresponding to the playback control.

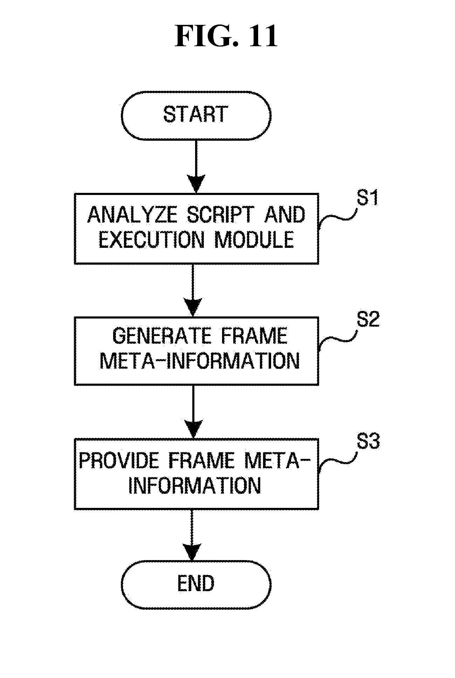

FIG. 11 illustrates the operation of a frame management unit, such as the frame management unit 150. Though embodiments are described with reference to particular systems having corresponding particular operations, embodiments of the present invention should not be limited thereto. Aspects of the invention may be accomplished through varying systems and varying operations.

The script 30 and the execution module 40 may be analyzed, in operation S1, e.g., by the frame management unit 150. For example, the frame management unit 150 may analyze the script 30 so as to grasp scenes included in the moving image and objects included in the scenes (e.g., the structure of the moving image). Then, the frame management unit 150 may analyze the execution module 40 so as to grasp the dynamic effects of the objects.

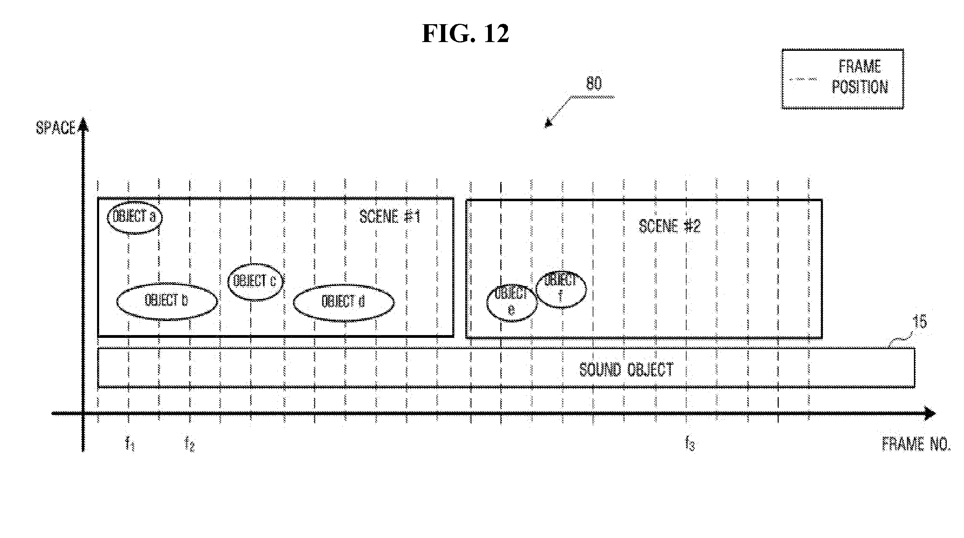

The frame management unit 10 may generate frame meta-information regarding objects included in respective frames, in operation S2. Assuming a moving image 80, as shown in FIG. 12, the dotted lines indicate the location of frames. Objects included in respective frames may vary. For example, frame f1 may include, for example, object a, object b, a sound object 15, and the background image of scene #1; frame f2 may include object b, the sound object 15, and the background image of scene #1; and frame f3 may include the sound object 15 and the background image of scene #2.

The execution module 40 may have the dynamic effects of the objects recorded therein so that the frame management unit 150 may calculate the attributes of objects of a specific frame based on the record. The attributes may include, for example, the corresponding object's X coordinate, Y coordinate, depth, rotational angle, width, height, and transparency.

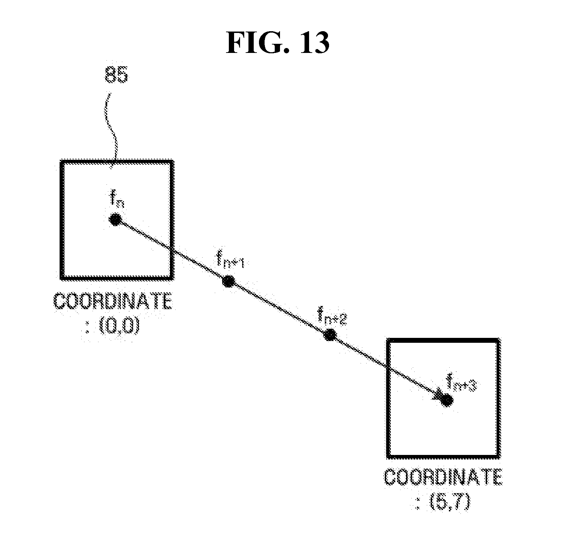

Let's suppose that, as shown in FIG. 13, an object 85 has such a dynamic effect that it moves from coordinate (0, 0) (i.e. both X and Y coordinates are 0) to coordinate (5, 7), and the movement time corresponds to three frame intervals (a frame interval refers to the inverse number of a frame rate). Then, the coordinate of the object 85 at frame location fₙ₊₁ is calculated as (5/3, 7/3), and that at frame location fₙ₊₂ is calculated as (10/3, 14/3). In this manner, all attributes of the object 85 belonging to a specific frame location may be calculated.

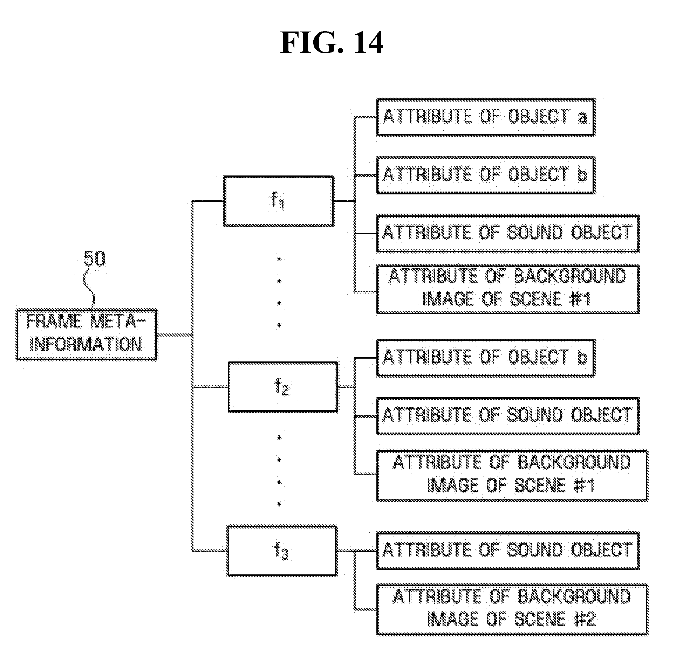

As such, the frame management unit 150 may grasp objects included in frames and record the attributes of respective objects so as to generate frame meta-information 50. The frame meta-information 50 may be recorded in a structure as shown in FIG. 14. Unlike visual objects, the sound objects typically have no dynamic effect, and need nothing but time information at the corresponding frame location (e.g. synchronization information) as their attributes. This is because sound objects can be accessed arbitrarily at a specific location.

Finally, at the request of the playing unit 120, the frame management unit 150 may provide the generated frame meta-information 50, in operation S3.

The playing unit 120 may get objects included in a specific frame and their attributes from the frame meta-information 50. In addition, the playing unit 120 may load the objects from the object storage unit 140 and generate a frame image. Thus, after receiving the frame meta-information 50, the playing unit 120 may display the moving image frame by frame according to various playback control commands from the user. For example, upon receiving playback control command "play", the playing unit 120 may successively read frame information from the frame meta-information 50 and play the image. Upon receiving a playback control command, such as "backward at triple rates", the playing unit 120 may read frame information from the current frame in the inverse order and play the image at three times the original frame rate. Upon receiving playback control command "access arbitrarily", the playing unit 120 may move to a corresponding frame number and begin normal playback. While frame images generated by the playing unit 120 are played, the playing unit 120 may synchronize sound objects with the playback of the frame images and play them.

The encoder 130 may apply a codec or a compression algorithm (e.g., MPEG, H.264) to the frame images generated by the playing unit 330 and generate a compressed video stream. The sound objects are synchronized with the generated video stream and constitute a part of the video stream. If necessary, the encoder 130 may also compress the sound objects using a sound compression codec (e.g., MP3, AC3).

When a moving image is to be played by a portable compact device rather than a PC, the device generally must have a flash player embedded therein. Alternatively, the moving image should be encoded in a format compatible with the device. Currently, most digital cameras/camcorders incorporate MPEG moving image playing functions, and, therefore, the moving image may need to be converted in a corresponding format. As such, the encoder 130 may generate and provide video streams according to requirements of various target devices.

In order to generate a video stream, the encoder 130 should receive an input of necessary conditions, including, for example, a codec, a frame rate, a resolution, etc. The encoder 130 may receive corresponding information from a target device and automatically set up these conditions. However, considering that the video stream generated by the encoder 130 may lose all information regarding internal objects, in contrast with the original moving image, it may be more efficient to provide the moving image itself as long as the target device has sufficient specifications.

Respective components shown in FIG. 3 may be implemented as software executed in a predetermined region of a memory (e.g. tasks, classes, subroutines, processes, objects, executable threads, or programs), hardware (e.g. FPGA (Field Programmable Gate Array) or ASIC (Application Specific Integrated Circuit)), or a combination of software and hardware.

In addition to the above described embodiments, embodiments of the present invention may also be implemented through computer readable code/instructions in/on a medium, e.g., a computer readable medium, to control at least one processing element to implement any above described embodiment. The medium can correspond to any medium/media permitting the storing and/or transmission of the computer readable code.

The computer readable code may be recorded/transferred on a medium in a variety of ways, with examples of the medium including recording media, such as magnetic storage media (e.g., ROM, floppy disks, hard disks, etc.) and optical recording media (e.g., CD-ROMs, or DVDs), and transmission media such as carrier waves, as well as through the Internet, for example. Thus, the medium may further be a signal, such as a resultant signal or bitstream, according to embodiments of the present invention. The media may also be a distributed network, so that the computer readable code is stored/transferred and executed in a distributed fashion. Still further, as only an example, the processing element could include a processor or a computer processor, and processing elements may be distributed and/or included in a single device.

As mentioned above, the present invention makes it possible to easily generate a moving image including various objects, play or control the generated moving image frame by frame, and easily convert the moving image into a compressed video stream.

Although a few embodiments have been shown and described, it would be appreciated by those skilled in the art that changes may be made in these embodiments without departing from the principles and spirit of the invention, the scope of which is defined in the claims and their equivalents.

## Claims

1. A moving image playing system, comprising:
a generating unit generating a script and an execution module, the script defining a structure of the moving image including at least one content object and the execution module defining a dynamic effect of the content object;
a frame management unit analyzing the script and the execution module and generating frame meta-information based on a predetermined frame rate; and
a playing unit applying the content object to the frame meta-information and constructing frame images.

2. The system of claim 1, further comprising an encoder applying a predetermined codec to the constructed frame images and generating a video stream.

3. The system of claim 1, further comprising a user interface receiving a user command and displaying the constructed frame images.

4. The system of claim 1, wherein the generating unit is adapted to generate the script and the execution module by applying a user selected content object to a template predefining the structure of the content object and the dynamic effect.

5. The system of claim 1, wherein the execution module is a shock wave flash file.

6. The system of claim 1, wherein the content object is constructed for respective scenes differentiated based on a background image.

7. The system of claim 1, wherein the frame meta-information comprises a content object, of the at least one content objects, belonging to each frame and an attribute of the content object.

8. The system of claim 7, wherein the attribute comprises at least one of a horizontal coordinate, a vertical coordinate, a depth, a rotational angle, a width, a height, and a transparency.

9. The system of claim 1, wherein the playing unit is adapted to receive a playback control command from a user, apply the content object to frame meta-information regarding a frame corresponding to the playback control command so as to construct frame images, and display the constructed frame images according to the playback control command.

10. The system of claim 9, wherein the playing unit is adapted to synchronize a sound content object with the displayed frame images and play the sound content object.

11. A moving image playing method, comprising:
generating a script and an execution module, the script defining a structure of the moving image including at least one content object and the execution module defining a dynamic effect of the content object;
analyzing the script and the execution module and generating frame meta-information based on a predetermined frame rate; and
applying the content object to the frame meta-information and constructing frame images.

12. The method of claim 11, which further comprises applying a predetermined codec to the constructed frame images and generating a video stream.

13. The method of claim 11, which further comprises receiving a user command and providing a user with the constructed frame images.

14. The method of claim 11, wherein the generating of the script and the execution module comprises generating the script and the execution module by applying a user selected content object to a template predefining the structure of the content object and the dynamic effect.

15. The method of claim 11, wherein the execution module is a shock wave flash file.

16. The method of claim 11, wherein the content object is constructed for respective scenes differentiated based on a background image.

17. The method of claim 11, wherein the frame meta-information comprises a content object, of the at least one content objects, belonging to each frame and an attribute of the content object.

18. The method of claim 17, wherein the attribute comprises at least one of a horizontal coordinate, a vertical coordinate, a depth, a rotational angle, a width, a height, and a transparency.

19. The method of claim 11, wherein the applying the content object to the frame meta-information comprises:
receiving an input of a playback control command from a user and apply the content object to frame meta-information regarding a frame corresponding to the playback control command so as to construct frame images; and
displaying the constructed frame images according to the playback control command.

20. The method of claim 19, wherein the applying the content object to the frame meta-information further comprises synchronizing a sound content object with the displayed frame images and play the sound content object.

21. At least one medium comprising computer readable code to control at least one processing element to implement the method of claim 11.

22. A moving image playing system, comprising:
a user selectable template predefining a structure of at least one user selected content object making up the moving image and predefining a dynamic effect of the content object.
